# EUROPEAN PATENT SPECIFICATION

(11) **EP 2 771 938 B1**
(45) Date of publication and mention of the grant of the patent: **09.08.2017**
(21) Application number: 12780389.8
(22) Date of filing: 24.10.2012
(51) Int. Cl.: H01M 10/0525, H01M 10/0565

(54) **POLYURETHANE BASED ELECTROLYTE SYSTEMS FOR ELECTROCHEMICAL CELLS**
POLYURETHAN-BASIERTE ELEKTROLYTSYSTEME FÜR ELEKTROCHEMISCHE ZELLEN
SYSTÈME ÉLECTROLYTIQUE À BASE DE POLYURÉTHANE POUR DES CELLULES ÉLECTROCHIMIQUES

(30) Priority: 28.10.2011 US 201161552544 P
(43) Date of publication of application: 03.09.2014
(73) Proprietor: Lubrizol Advanced Materials, Inc., Cleveland, OH 44141-3247 (US)
(72) Inventor: CAO, Feina, Canton, Michigan 48187 (US); GOR, Tesham, Brecksville, Ohio 44141 (US); LU, Qiwei, Seven Hills, Ohio 44131 (US); ECKSTEIN, Yona, Coconut Creek, Florida 33066 (US); Xie, Jian, Carmel, Indiana 46033 (US); MELTZER, Donald A., Akron, Ohio 44333 (US)
(74) Representative: dompatent von Kreisler Selting Werner - Partnerschaft von Patent- und Rechtsanwälten mbB
(86) International application number: PCT/US2012/061522
(87) International publication number: WO 2013/062991

(56) References cited:
- EP-A1- 2 071 584
- US-A- 5 558 959
- US-A1- 2002 061 449
- US-A1- 2011 168 043

## Description

### BACKGROUND OF THE INVENTION

The invention relates to an electrolyte system comprising a poly(dialkylene ester) thermoplastic polyurethane composition. The invention also provides an electrochemical cell using such electrolyte systems.

There has been a great deal of interest in developing safer, better, and more efficient methods for storing energy for applications such as radio communication, satellites, portable computers and electric vehicles to name but a few. There have also been concerted efforts to develop high energy, cost effective batteries having improved performance characteristics, particularly as compared to storage systems known in the art.

Rechargeable cells, or secondary cells, are more desirable than primary cells, non-rechargeable cells, since the associated chemical reactions that take place at the positive and negative electrodes of the battery are reversible. Electrodes for secondary cells are capable of being regenerated (i.e., recharged) many times by the application of an electrical charge thereto. Numerous advanced electrode systems have been developed for storing electrical charge. Concurrently, much effort has been dedicated to the development of membranes and electrolytes capable of enhancing the capabilities of electrochemical cells.

Heretofore, electrolytes have been either liquid electrolytes as are found in conventional wet cell batteries, or solid films as are available in newer, more advanced battery systems. Each of these systems have inherent limitations, and related deficiencies which make them unsuitable for various applications.

Liquid electrolytes, while demonstrating acceptable ionic conductivity, tend to leak out of the cells into which they are sealed. While better manufacturing techniques have lessened the occurrence of leakage, cells still do leak potentially dangerous liquid electrolytes from time to time. This is particularly true of current lithium ion cells. Moreover, any leakage from the cell lessens the amount of electrolyte available in the cell, thus reducing the effectiveness of the cell. Cells using liquid electrolytes are also not available for all sizes and shapes of batteries. The safety concerns with electrochemical cells generally center on the electrolyte systems, which are often flammable liquids solutions. Thus, there is a need for electrolyte systems that control, reduce, or even eliminate the safety risks associated with conventional electrolyte systems and the cells they are used in.

One set of alternatives are solid electrolytes, which are free from problems of leakage. However, they have vastly inferior properties as compared to liquid electrolytes. For example, conventional solid electrolytes have ionic conductivities in the range of 10⁻⁵ S/cm (which stands for Siemens per centimeter), whereas acceptable ionic conductivity is generally considered to be >10⁻³ S/cm. Good ionic conductivity is necessary to ensure a battery system capable of delivering usable amounts of power for a given application. Good conductivity is necessary for the high rate operation demanded by, for example, cellular telephones and satellites. Accordingly, solid electrolytes are not adequate for many high performance battery systems.

Examples of solid polymer electrolytes include dry solid polymer systems in which a polymer, such as polyurethane, is mixed with an electrolyte salt in dry or powdered form. These types of systems are disclosed in, for example, Ionic Conductivity of Polyether-Polyurethane Networks Containing Alkali Metal Salts. An Analysis of the Concentration Effect, Macromolecules, Vol. 17, No. 1, 1984, pgs. 63-66, to Killis, et al; and Poly(dimethylsiloxane)--Poly(ethylene oxide) Based Polyurethane Networks Used As Electrolytes in Lithium Electrochemical Solid State Batteries, Solid State Ionics, 15 (1985) 233-240, to Bouridah, et al. Unfortunately, these dry systems, like the solid electrolytes discussed above, are characterized by relatively poor ionic conductivity.

One solution which has been proposed relates to the use of so-called gel electrolytes for electrochemical systems. Gels or plasticized polymeric systems are wet systems, not dry, as described above. Heretofore most gel electrolyte systems have been based on homopolymers, i.e., single polymer systems. Homopolymer-based gel electrolytes have not been successful as they tend to dissolve in higher concentrations of the electrolyte solvent, thus losing mechanical integrity.

Accordingly, there exists a need for a new electrolyte system which combines the mechanical stability and freedom from leakage offered by solid electrolytes with the high ionic conductivities of liquid electrolytes.

In other words, there is a need for improved electrolyte systems, as well as improved electrochemical cells that use one such electrolyte systems, which address the problems seen in the current alternatives.

### SUMMARY OF THE INVENTION

The present invention provides: polyurethane based electrolyte systems for use in electrochemical cells made from the described poly(dialkylene ester) thermoplastic polyurethane composition; and the electrochemical cells themselves that utilize such electrolyte systems. The invention further provides for such electrochemical cells where: (i) the electrodes of the cells are composite electrodes made using the described poly(dialkylene ester) thermoplastic polyurethane composition; (ii) the separators and/or membranes of the cells are made from the described poly(dialkylene ester) thermoplastic polyurethane composition; or (iii) a combination thereof. A polymer gel electrolyte system for use in an electrochemical cell having positive and negative electrodes, said electrolyte system comprising: (A) a poly(dialkylene ester) thermoplastic polyurethane composition, (B) an alkali metal salt; and (C) an aprotic organic solvent, characterized in that the poly(dialkylene ester) thermoplastic polyurethane composition is made by reacting (i) at least one poly(dialkylene ester) polyol intermediate with (ii) at least one diisocyanate and (iii) at least one chain extender, wherein (i), the polyester (dialkylene ester) polyol intermediate, comprises an intermediate derived from diethylene glycol and adipic acid and having a number average molecular weight of from 1,000 to 4,000 and wherein (iii), the chain extender, is hydroquinone bis (beta-hydroxyethyl) ether and/or 1,4-butanediol.

The invention also provides an electrochemical cell comprising a positive electrode, a negative electrode, and (I) a polymer electrolyte disposed between said positive and negative electrodes, wherein the polymer electrolyte comprises (A) the described poly(dialkylene ester) thermoplastic polyurethane composition, (B) an alkali metal salt, and (C) an aprotic organic solvent. The electrochemical cell may also include a separator membrane disposed between said positive and negative electrodes, wherein the said membrane comprises (A) the described poly(dialkylene ester) thermoplastic polyurethane composition.

In some embodiments, the electrochemical cell has at least one of the following characteristics: (i) a charge/discharge cycle life of >500, >750 or even >1000; (ii) a charge/discharge efficiency of >90% or even >95% after 500 cycles; (iii) an operation window of -10°C to 70°C; (iv) is essentially free of any rigid metallic casing; and/or (v) is a pouch type battery.

### DETAILED DESCRIPTION OF THE INVENTION

Various features and embodiments of the invention will be described below by way of non-limiting illustration.

The present invention relates to a composition comprising at least one thermoplastic polyurethane elastomer, more specifically a poly(dialkylene ester) thermoplastic polyurethane, where the composition is used in the preparation of the described electrolyte system, or an electrochemical cell that utilizes the described electrolyte system.

### The Electrolyte System

The invention provides for an electrolyte system which combines the mechanical stability and freedom from leakage offered by solid electrolytes with the high ionic conductivities of liquid electrolytes. The electrolyte system may comprise a homogenous polymer gel composition comprising the poly(dialkylene ester) thermoplastic polyurethane described herein. These electrolyte systems do not contain any free flowing liquid, rather the electrolyte system is a homogenous single-phase composition that may be described as a polymer gel composition.

In some embodiments, the poly(dialkylene ester) thermoplastic polyurethane according to claim 1 is adapted to engage, as for example, by absorption, an electrochemically active species or material. The electrochemically active material may be a liquid electrolyte, such as a metal salt that is dissolved in an organic solvent and which is adapted to promote ion transport between the positive and negative electrodes of an electrochemical cell (or battery).

The liquid electrolyte absorbed by the polyurethane may be selected to optimize performance of the positive and negative electrodes. In one embodiment, for a lithium based electrochemical cell, the liquid electrolyte absorbed by the polyurethane is typically a solution of an alkali metal salt, or combination of salts, dissolved in an aprotic organic solvent or solvents. Typical alkali metal salts include, but are not limited to, salts having the formula M⁺X⁻ where M⁺ is a alkali metal cation such as Li⁺, Na⁺, K⁺ and combinations thereof; and X⁻ is an anion such as Cl⁻, Br⁻, I⁻, ClO₄⁻, BF4⁻, PF₅⁻, AsF₆⁻, SbF₆⁻, CH₃CO₂⁻, CF₃SO₃⁻, (CF₃O₂)₂N⁻, (CF₃SO₂)₂N⁻, (CF₃SO₂)₃C⁻, and combinations thereof. In some embodiments, these salts are all lithium salts. Aprotic organic solvents include, but are not limited to, propylene carbonate, ethylene carbonate, diethyl carbonate, ethyl methyl carbonate, dimethyl carbonate, dipropyl carbonate, dimethyl sulfoxide, acetonitrile, dimethoxyethane, diethoxyethane, tetrahydrofuran, and combinations thereof.

Suitable salts also include halogen-free lithium-containing salt. In some embodiments, the salt is represented by the formula: 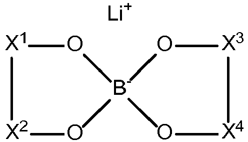 wherein each -X¹-, -X²-, -X³- and -X⁴- is independently -C(O)-, -C(R¹R²)-, -C(O)-C(R¹R²)- or -C(R¹R²)-C(R¹R²)- where each R¹ and R² is independently hydrogen or a hydrocarbyl group and wherein the R¹ and R² of a given X group may be linked to form a ring. In some embodiments, the salt is represent by the formula above wherein -X¹-, -X²-, -X³- and -X⁴- are -C(O)-. Suitable salts also include the open, -ate structures of such salts, including Lithium bis(oxalate)borate. In some embodiments, the halogen-free lithium-containing salt comprises lithium bis(oxalato)borate, lithium bis(glycolato)borate, lithium bis(lactato)borate, lithium bis(malonato)borate, lithium bis(salicylate)borate, lithium (glycolato,oxalato) borate, or combinations thereof.

In some embodiments, the electrolyte system includes an organic polymeric support structure, which may be fabricated of any of the polyurethane elastomers compositions described herein. The poly(dialkylene ester) thermoplastic polyurethanes according to claim 1 useful in the present invention are made by reacting (i) at least one poly(dialkylene ester) polyol intermediate with (ii) at least one diisocyanate and (iii) at least one chain extender.

In some embodiments, the electrolyte system for an electrochemical cell comprises an electrolyte active species dispersed in the polymeric support structure comprising a poly(dialkylene ester) thermoplastic polyurethane composition made by reacting (i) at least one poly(dialkylene ester) polyol intermediate with (ii) at least one diisocyanate and (iii) at least one chain extender; wherein (i), the polyester polyol intermediate, comprises an intermediate derived from at least one dialkylene glycol and at least one di-carboxylic acid, or an ester or anhydride thereof.

The instant electrolyte system also has the important advantage of having a polyurethane which is easily processable and reprocessable, since the materials are thermoplastic elastomers. Other prior art gel systems are typically permanently chemically cross-linked either by radiation (e-beam, UV, etc.) or by using a chemical crosslinking agent, for example, diisocyanates which can be used to crosslink polyether triols. While the polyurethane-based electrolyte systems of the present invention may also be cross-linked by such methods, including but not limited to the use of radiation, they represent more easily processable and reprocessable systems.

The invention provides an electrolyte system for use in an electrochemical cell having positive and negative electrodes, said electrolyte system comprising: (A) a poly(dialkylene ester) thermoplastic polyurethane composition made by reacting (i) at least one poly(dialkylene ester) polyol intermediate with (ii) at least one diisocyanate and (iii) at least one chain extender, wherein (i), the polyester polyol intermediate, comprises an intermediate derived from at least one dialkylene glycol and at least one di-carboxylic acid, or an ester or anhydride thereof; (B) an alkali metal salt; and (C) an aprotic organic solvent.

In some embodiments, the poly(dialkylene ester) thermoplastic polyurethane composition is used in the fabrication of the polymeric support of the electrolyte system which is itself prepared with a chain extender that includes hydroquinone bis (beta-hydroxyethyl) ether.

In some embodiments, the electrolyte species of the electrolyte system is a liquid electrolyte, for example an alkali metal salt, wherein the electrolyte is dissolved in an aprotic organic solvent. The alkali metal salt may be a material having the formula M⁺X⁻ wherein M⁺ is an alkali metal cation such as Li⁺, Na⁺, K⁺ or combinations thereof and where X⁻ is an ion such as Cl⁻, Br⁻, I⁻, ClO₄⁻, BF₄⁻, PF₆⁻, AsF₆⁻, SbF₆⁻, CH₃CO₂⁻, CF₃SO₃⁻, (CH₃SO₂)₂N⁻, (CF₃SO₂)₃C⁻, B(C₂O₄)⁻, or combinations thereof. In some embodiments, these salts are all lithium salts. The aprotic organic solvent may be propylene carbonate, ethylene carbonate, diethyl carbonate, ethyl methyl carbonate, dimethyl carbonate, dipropyl carbonate, dimethyl sulfoxide, acetonitrile, dimethyloxyethane, diethoxyethane, tetrahydrofuran and combinations thereof.

### The Thermoplastic Polyurethane Compositions

The thermoplastic polyurethane compositions of the present invention are poly(dialkylene ester) thermoplastic polyurethane compositions. The poly(dialkylene ester) thermoplastic polyurethane is made by reacting (i) at least one poly(dialkylene ester) polyol intermediate with (ii) at least one diisocyanate and (iii) at least one chain extender.

The poly(dialkylene ester) polyol intermediate comprises an intermediate derived from diethylene glycol and adipic acid and having a number average molecular weight of from 1,000 to 4,000. It is derived from at least one dialkylene glycol and at least one di-carboxylic acid, or an ester or anhydride thereof. However, other polyol intermediates may also be present and used in combination with the poly(dialkylene ester) polyol intermediate described herein.

The di-carboxylic acid is adipic acid.

The dialkylene glycol described above is diethylene glycol.

The poly(dialkylene ester) polyol intermediate is derived from adipic acid and diethylene glycol, and has a number average molecular weight of from 1000 to 4000, or from 1500 to 3500, or even from 2000 to 3000. In some embodiments, the poly(dialkylene ester) polyol intermediate is used in combination with a second polyol comprising a poly(mono-alkylene ester), for example, a polyester polyol derived from butanediol and adipic acid, where the resulting polyol may have a number average molecular weight of from 100 to 4000, or from 1500 to 3500, or even from 2000 or 2100 to 3000.

As noted above, the poly(dialkylene ester) thermoplastic polyurethane is made by reacting (i) at least one poly(dialkylene ester) polyol intermediate with (ii) at least one diisocyanate and (iii) at least one chain extender.

The poly(dialkylene ester) polyol intermediate may be used in combination with one or more additional polyols. Suitable polyester polyol intermediates for use in this invention may be derived from at least one dialkylene glycol and at least one dicarboxylic acid, or an ester or anhydride thereof. The polyester polyol intermediates of the present invention may include at least one terminal hydroxyl group, and in some embodiments, at least one terminal hydroxyl group and one or more carboxylic acid groups. In another embodiment, the polyester polyol intermediates include two terminal hydroxyl groups, and in some embodiments, two hydroxyl groups and one or more, or two, carboxylic acid groups. The polyester polyol intermediates are generally a substantially linear, or linear, polyester having a number average molecular weight (Mn) of from about 500 to about 10,000, about 500 to about 5000, or from about 1000 to about 3000, or about 2000.

In some embodiments, the poly(dialkylene ester) polyol intermediate may have a low acid number, such as less than 1.5, less than 1.0, or even less than 0.8. A low acid number for the poly(dialkylene ester) polyol intermediate may generally provide improved hydrolytic stability in the resulting TPU polymer. The acid number may be determined by ASTM D-4662 and is defined as the quantity of base, expressed in milligrams of potassium hydroxide that is required to titrate acidic constituents in 1.0 gram of sample. Hydrolytic stability can also be improved by adding hydrolytic stabilizers to the TPU which are known to those skilled in the art of formulating TPU polymers.

Dialkylene glycol suitable for use in preparing the poly(dialkylene ester) polyol intermediate of the present invention is diethylene glycol. Blends of two or more glycols may be used. In some embodiments, monoalkylene glycols may be used in combination with the diethylene glycol described above. In other embodiments the glycol used to prepare the poly(dialkylene ester) polyol intermediate is free of monoalkylene glycols.

Dicarboxylic acid suitable for use in preparing the poly(dialkylene ester) polyol intermediate of the present invention is adipic acid.

The polyester polyol intermediates of the present invention may also be derived from an ester or anhydride of one or more the dicarboxylic acids described above or combinations of such materials. Suitable anhydrides include succinic anhydride, alkyl and/or alkenyl succinic anhydride, phthalic anhydride and tetrahydrophthalic anhydride. The acid is adipic acid. Blends of two or more acids may be used.

The polyester polyol intermediates of the present invention are prepared by reacting one or more of the dialkylene glycol described above with one or more of the dicarboxylic acids described above, and/or one or more of the esters or anhydrides thereof. In some embodiments, more than one equivalent of glycol is used for each equivalent of acid. The preparation includes (1) an esterification reaction of one or more dialkylene glycols with one or more dicarboxylic acids or anhydrides or (2) by transesterification reaction, i.e., the reaction of one or more dialkylene glycols with esters of dicarboxylic acids. Mole ratios generally in excess of more than one mole of glycol to acid are preferred so as to obtain linear chains having a preponderance of terminal hydroxyl groups.

In some embodiments, the poly(dialkylene ester) polyol intermediate of the present invention is used in combination with a polyether polyol intermediate and/or a conventional polyester intermediate. As used herein, the polyester polyol intermediates of the present invention may include a mixture of polyester and polyether linkages, but may not contain only polyether linkages or, in some embodiments, more than 70% polyether linkages, based on the total number of polyether and polyester linkages. In other embodiments the compositions of the present invention are substantially free, or free of, polyether polyol intermediates, and such materials are not used in the preparation, where polyether polyol intermediates as used herein can mean intermediates containing only polyether linkages, or containing less than 50, 40, 20, or even 15 percent polyester linkages.

In some embodiments, the poly(dialkylene ester) polyol intermediate of the present invention is used in combination with a polyether polyol intermediate and/or a conventional polyester intermediate. In such embodiments, the ratio of the poly(dialkylene ester) polyol intermediate to the polyether polyol and/or conventional polyester intermediate is about 10:90 to about 90:10, about 25:75 to about 75:25, or about 60:40 to 40:60. In some embodiments, the ratio is such that no more than 50% by weight of the overall composition is polyether polyol and/or conventional polyester intermediate.

As noted above, the poly(dialkylene ester) thermoplastic polyurethane is made by reacting (i) at least one poly(dialkylene ester) polyol intermediate with (ii) at least one diisocyanate and (iii) at least one chain extender. Suitable diisocyanates include: (i) aromatic diisocyanates such as: 4,4'-methylenebis-(phenyl isocyanate) (MDI), m-xylylene diisocyanate (XDI), phenylene-1,4-diisocyanate, 1,5-naphthalene diisocyanate, diphenylmethane-3,3'-dimethoxy-4,4'-diisocyanate (TODI), and toluene diisocyanate (TDI); as well as (ii) aliphatic diisocyanates such as: isophorone diisocyanate (IPDI), 1,4-cyclohexyl diisocyanate (CHDI), decane-1,10-diisocyanate, hexamethylene diisocyanate (HDI), and dicyclohexylmethane-4,4'-diisocyanate. In some embodiments, the diisocyanate is 4,4'-methylenebis(phenyl isocyanate) (MDI). In other embodiments, one or more of the diisocyanates listed may be excluded from the present invention.

A mixture of two or more diisocyanates can be used. Also, small amounts of isocyanates having a functionality greater than 2, such as tri-isocyanates can be used together with the diisocyanates. Large amounts of isocyanates with a functionality of 3 or more should be avoided as they will cause the TPU polymer to be cross linked.

As noted above, the poly(dialkylene ester) thermoplastic polyurethane is made by reacting (i) at least one poly(dialkylene ester) polyol intermediate with (ii) at least one diisocyanate and (iii) at least one chain extender. Suitable chain extenders include glycols and can be aliphatic, aromatic or combinations thereof. In some embodiments, the chain extender is an aromatic glycol, or a mixture of chain extenders is used which includes an aromatic glycol.

In some embodiments, the chain extender includes 1,4-butanediol. In some embodiments, the chain extender, and/or the overall TPU, is essentially free of, or even completely free of CHDM.

The aromatic glycol hydroquinone bis(hydroxylethyl ether) or bis(beta-hydroxyethyl)ether also known as 1,4-di(2-hydroxyethoxy)benzene and often referred to as HQEE may be used as chain extender.

A mixture of two or more glycols may be used as the chain extender. In some embodiments, the chain extender is a mixture of HQEE and 1,4-butanediol.

Diamines may also be used as a chain extender, as is well known in the art. In one embodiment of the present invention, the chain extender contains a diamine as a co-chain extender in combination with one or more of the chain extenders described above, such as HQEE. In other embodiments, the present invention does not use any diamines in the preparation of its compositions.

In still other embodiments, the chain extender used in the present invention is essentially free or, or even completely free of, butanediol, ethylene glycol, and/or the diamine co-chain extenders as describe above.

The thermoplastic polyurethane compositions of the present invention may also include a solid. The thermoplastic polyurethane compositions may be from 1 to 99 percent by weight polyurethane elastomer and from 99 to 1 percent by weight of a solid, wherein the solid is incorporated in the thermoplastic polyurethane elastomer. The solid content may also be from 3 to 95, 5 to 97, 10 to 90, or even 5 to 20 or 10 to 20 percent by weight, with the balance of the composition being the polyurethane elastomer.

Suitable solids are mainly inorganic solids, preferably inorganic basic solids selected from the class consisting of oxides, compound oxides, silicates, sulfates, carbonates, phosphates, nitrides, amides, imides and carbides of the elements of the 1st, 2nd, 3rd or 4th main group or the 4th subgroup of the periodic table.

Particular examples are: oxides, such as calcium oxide, silica, alumina, magnesium oxide and titanium dioxide, mixed oxides, for example, of the elements silicon, calcium, aluminum, magnesium and titanium; silicates, such as ladder-type, ino-, phyllo- and tectosilicates, preferably wollastonite, in particular hydrophobicized wollastonite, sulfates, such as those of alkali metals and alkaline-earth metals; carbonates, for example, those of alkali metals and alkaline-earth metals, for example calcium, magnesium, barium, lithium, potassium and sodium carbonate; phosphates, such as apatites; nitrides; amides; imides; carbides; polymers, such as polyethylene, polypropylene, polystyrene, polytetrafluoroethylene and polyvinylidene fluoride; polyamides; polyimides; and other thermoplastics, thermosets and microgels, solid dispersions, in particular those which comprise the polymers mentioned above, and also mixtures of two or more of the above mentioned solids.

Particularly to be mentioned are: Wollastonite (CaSiO₃), CaCO₃, mixed oxides or carbonates of Mg and Ca, such as dolomite, in the grounded and precipitated form, respectively, silicates (SiO₂), talc (SiO₂*MgO), Al₂O₃, kaolin (Al₂O₃*SiO₂), and synthesized ceramics, polymer powders which do not solve into electrolyte solvents, preferably those as specifically mentioned above, and surface-treated fillers, which have been treated with, e.g., silane coupling agents which are electrochemically stable.

According to the invention, the solids used may also be inorganic Li-ion-conducting solids, preferably an inorganic basic Li-ion-conducting solid.

Examples of these are: lithium borates, such as Li₄B₆O₁₁*xH₂O, Li₃ (BO₂)₃, Li₂B₄O₇*xH₂O, LiBO₂, where x can be a number from 0 to 20; lithium aluminates, such as Li₂O*Al₂O₃*H₂O, Li₂Al₂O₄, LiAlO₂; lithium aluminosilicates, such as lithium-containing zeolites, feldspars, feldspathoids, phyllo- and inosilicates, and in particular LiAlSi₂O₆ (spodumene), LiAlSiO₁₀ (petullite), LiAlSiO₄ (eucryptite), micas, such as K[Li,Al]₃ [AlSi]₄O₁₀ (F-OH) ₂/K[Li,Al,Fe]₃ [AlSi]₄O₁₀ (F-OH)₂; lithium zeolites, in particular those whose form is fiber-like, sheet-like or cube-like, in particular those of the formula Li₂/z O*Al₂O₃*xSiO₂*yH₂O where z corresponds to the valence, x is from 1.8 to about 12 and y is from 0 to about 8; lithium carbides, such as Li₂C₂, Li₄C; Li₃N; lithium oxides and lithium mixed oxides, such as LiAlO₂, Li₂MnO₃, Li₂O, Li₂O₂, Li₂MnO₄, Li₂TiO₃; Li₂NH; LiNH₂; lithium phosphates, such as Li₃PO₄, LiPO₃, LiAlFPO₄, LiAl(OH)PO₄, LiFePO₄, LiMnPO₄; Li₂CO₃; lithium silicates in the form of ladder-type, ino-, phyllo- and tectosilicates, such as Li₂ SiO₃, Li₂SiO₄, Li₂S-SiS₂, and mechanically milled products from Li₂S, SiS₂ and Li₄SiO₂, wherein the most preferably product constituted by these three compounds has the following composition: 95 wt.-% (0,6 Li₂S 0,4 SiS₂) 5 wt.-% Li₄SiO₄, and Li₆Si₂ ; lithium sulfates, such as Li₂SO₄, LiHSO₄, LiKSO₄; the Li compounds mentioned during the discussion of the cathode layer, the presence of conductive carbon black being excluded when these are used as solid III; and also mixtures of two or more of the Li-ion-conducting solids mentioned above.

In some embodiments, the thermoplastic polyurethane compositions of the present invention may further comprise a metal-containing salt, salt complex, or salt compound formed by the union of metal ion with a non-metallic ion or molecule. Examples of salts useful in the present invention include: LiClO₄, LiN(CF₃SO₂)₂, LiPF₆, LiAsF₆, LiI, LiCl, LiBr, LiSCN, LiSO₃ CF₃, LiNO₃, LiC(SO₂CF₃)₃, Li₂S, and LiMR₄, where M is Al or B, and R is a halogen, hydrocarbyl, alkyl or aryl group. In one embodiment, the salt is the lithium salt of trifluoromethane sulfonic acid, or LiN(CF₃SO₂)₂, which is commonly referred to as lithium trifluoromethane sulfonamide. Suitable salts also include the halogen-free lithium-containing salts described above, for example: lithium bis(oxalato)borate, lithium bis(glycolato)borate, lithium bis(lactato)borate, lithium bis(malonato)borate, lithium bis(salicylate)borate, lithium (glycolato,oxalato) borate, or combinations thereof. The effective amount of the selected salt added to the one-shot polymerization may be at least about 0.10, 0.25, or even 0.75 parts by weight based on 100 parts by weight of the polymer.

In other embodiments, the thermoplastic polyurethane compositions of the present invention are substantially free to completely free of any or all of the solids and/or metal containing salts described herein. In some embodiments, the thermoplastic polyurethane compositions contain less than 10% by weight of such materials, and in other embodiments less than 8%, 6%, 5%, 3%, or even 2% by weight of such materials.

The solids, when present, may be substantially insoluble in the liquid used as electrolyte, and also be electrochemically inert in the battery medium. In some embodiments, the solids are basic solids. For the purposes of the invention, basic solids are those whose mixture with a liquid water-containing diluent, which itself has a pH of not more than 7, has a higher pH than this diluent. In some embodiments, the solids have a primary particle size of from 5 nm to 25 microns, preferably from 0.01 to 10 microns and in particular from 0.01 to 5 microns, and more particular 0.02 to 1 microns, the particle sizes given being determined by electron microscopy. The melting point of the solids is preferably above the usual operating temperature of the electrochemical cell, and melting points of above 120°C, in particular above 150°C, have proven particularly advantageous. The solids here may be symmetrical in their external shape, i.e., have a dimensional ratio of height:width:length (aspect ratio) of about 1 and be shaped as spheres or pellets, be approximately round in shape, or else be in the shape of any desired polyhedron, such as a cuboid, tetrahedron, hexahedron, octahedron or bipyramid, or may be distorted or asymmetric, i.e., have a dimensional ratio height:width:length (aspect ratio) which is not equal to 1 and be, for example, in the form of needles, asymmetrical tetrahedra, asymmetrical bipyramids, asymmetrical hexa- or octahedra, lamellae or plates, or have fiber-like shape. If the solids are asymmetric particles, the upper limit given above for the primary particle size refers to the smallest axis in each case.

The thermoplastic polyurethane compositions according to the invention may also comprise other thermoplastic polymers, such as polyethylene oxide, copolymers on the basis of polyvinylidenedifluoride, polyacrylonitrile and poly(meth)acrylates, such as poly(methyl methacrylate). When using these other polymers, the ratio thereof may be within the range of 5 to 400 parts by weight based on 100 parts by weight of the thermoplastic polyurethane elastomer.

The above defined thermoplastic polyurethane elastomers may be produced according to commonly known processes.

In some embodiments, the poly(dialkylene ester) thermoplastic polyurethane of the invention is blended with a matrix or base polymer to form a polymer blend. These blends may also be made with the salt-modified polymers described herein.

Suitable base polymers as defined herein can be a homopolymer or a copolymer. The base polymer may be a blend of multiple base polymers, and may further include any of the additional additives described above, including ESD (electrostatic dissipative) additives. In other embodiments, the base polymer, and/or the compositions of the present invention, are substantially free to free of ESD additives.

The base polymer may include:
(i) a polyolefin (PO), such as polyethylene (PE), polypropylene (PP), polybutene, ethylene propylene rubber (EPR), polyoxyethylene (POE), cyclic olefin copolymer (COC), or combinations thereof;
(ii) a styrenic, such as polystyrene (PS), acrylonitrile butadiene styrene (ABS), styrene acrylonitrile (SAN), styrene butadiene rubber (SBR or HIPS), polyalphamethylstyrene, methyl methacrylate styrene (MS), styrene maleic anhydride (SMA), styrene-butadiene copolymer (SBC) (such as styrene-butadienestyrene copolymer (SBS) and styrene-ethylene/butadiene-styrene copolymer (SEBS)), styrene-ethylene/propylene-styrene copolymer (SEPS), styrene butadiene latex (SBL), SAN modified with ethylene propylene diene monomer (EPDM) and/or acrylic elastomers (for example, PS-SBR copolymers), or combinations thereof;
(iii) a thermoplastic polyurethane (TPU);
(iv) a polyamide, such as Nylon™, including polyamide 6,6 (PA66), polyamide 11 (PA11), polyamide 12 (PA12), a copolyamide (COPA), or combinations thereof;
(v) an acrylic polymer, such as poly(methyl acrylate), poly(methyl methacrylate), or combinations thereof;
(vi) a polyvinylchloride (PVC), a chlorinated polyvinylchloride (CPVC), or combinations thereof;
(vii) a polyoxymethylene, such as polyacetal;
(viii) a polyester, such as polyethylene terephthalate (PET), polybutylene terephthalate (PBT), copolyesters and/or polyester elastomers (COPE) including polyether-ester block copolymers such as glycol modified polyethylene terephthalate (PETG) poly(lactic acid) (PLA), or combinations thereof;
(ix) a polycarbonate (PC), a polyphenylene sulfide (PPS), a polyphenylene oxide (PPO), or combinations thereof;
or combinations thereof.

The thermoplastic polyurethane compositions according to the invention may also contain a plasticizer. The plasticizers used may be aprotic solvents, preferably those which solvate Li ions, for example, dimethyl carbonate, diethyl carbonate, dipropyl carbonate, diisopropyl carbonate, dibutyl carbonate, ethylene carbonate and propylene carbonate; oligoalkylene oxides, such as dibutyl ether, di-tert-butyl ether, dipentyl ether, dihexyl ether, diheptyl ether, dioctyl ether, dinonyl ether, didecyl ether, didodecyl ether, ethylene glycol dimethyl ether, ethylene glycol diethyl ether, 1-tert-butoxy-2-methoxyethane, 1-tert-butoxy-2-ethoxyethane, 1,2-dimethoxypropane, 2-methoxyethyl ether, 2-ethoxyethyl ether, diethylene glycol dibutyl ether, diethylene glycol tert-butyl methyl ether, triethylene glycol dimethyl ether, tetraethylene glycol dimethyl ether, gamma-butyrolactone and dimethylformamide; hydrocarbons of the formula Cn H₂n+2 where 7<n<50; organic phosphorus compounds, in particular phosphates and phosphonates, such as trimethyl phosphate, triethyl phosphate, tripropyl phosphate, tributyl phosphate, triisobutyl phosphate, tripentyl phosphate, trihexyl phosphate, trioctyl phosphate, tris(2-ethylhexyl)phosphate, tridecyl phosphate, diethyl n-butyl phosphate, tris(butoxyethyl)phosphate, tris(2-methoxyethyl) phosphate, tris(tetrahydrofuryl)phosphate, tris(1H,1H,SH-octafluoropentyl) phosphate, tris(1H, 1H-trifluoroethyl)phosphate, tris(2-(diethylamino)ethyl) phosphate, diethyl ethylphosphonate, dipropyl propylphosphonate, dibutyl butylphosphonate, dihexyl hexylphosphonate, dioctyl octylphosphonate, ethyl dimethylphosphonoacetate, methyl diethylphosphonoacetate, triethyl phosphonoacetate, dimethyl 2-oxopropylphosphonate, diethyl 2-oxopropylphosphonate, dipropyl 2-oxopropylphosphonate, ethyl diethoxyphosphinylformate, trimethyl phosphonoacetate, triethyl phosphonoacetate, tripropyl phosphonoacetate and tributyl phosphonoacetate; organic sulfur compounds, such as sulfates, sulfonates, sulfoxides, sulfones and sulfites, for example dimethyl sulfite, diethyl sulfite, glycol sulfite, dimethyl sulfone, diethyl sulfone, ethylpropyl sulfone, dipropyl sulfone, dibutyl sulfone, tetramethylene sulfone, methylsulfolane, dimethyl sulfoxide, diethyl sulfoxide, dipropyl sulfoxide, dibutyl sulfoxide, tetramethylene sulfoxide, ethyl methanesulfonate, 1,4-butanediol bis(methanesulfonate), diethyl sulfate, dipropyl sulfate, dibutyl sulfate, dihexyl sulfate, dioctyl sulfate and SO₂ ClF; and nitriles, such as acrylonitrile; dispersants, in particular those with surfactant structure; and mixtures of these.

The thermoplastic polyurethane compositions of the present invention may further include additional useful additives, where such additives can be utilized in suitable amounts. These optional additional additives include mineral and/or inert fillers, lubricants, processing aids, antioxidants, hydrolytic stabilizers, acid scavengers, and other additives as desired. Useful fillers include diatomaceous earth (superfloss) clay, silica, talc, mica, wallostonite, barium sulfate, and calcium carbonate. If desired, useful antioxidants include phenolic antioxidants. Useful lubricants include metal stearates, paraffin oils and amide waxes. Additives can also be used to improve the hydrolytic stability of the TPU polymer. Each of these optional additional additives described above may be present in, or excluded from, the thermoplastic polyurethane compositions of the invention.

When present, these additional additives may be present in the thermoplastic polyurethane compositions of the present invention from 0 or 0.01 to 5 or 2 weight percent of the composition. These ranges may apply separately to each additional additive present in the composition or to the total of all additional additives present.

The composition according to the invention may be dissolved and dispersed in an inorganic, but preferably organic liquid diluent, the resulting mixture being intended to have a viscosity of preferably 100 to 50,000 mPas, and then applying this solution or dispersion in a manner known per se, such as by casting, spraying, pouring, dipping, spin coating, roller coating or printing--by relief, intaglio, planographic or screen printing--to a carrier material. Subsequent processing can be done by customary methods, for example, by removing the diluent and curing the binder.

Suitable organic diluents are aliphatic ethers, especially tetrahydrofuran and dioxane, hydrocarbons, especially hydrocarbon mixtures such as petroleum spirit, toluene and xylene, aliphatic esters, especially ethyl acetate and butyl acetate, and ketones, especially acetone, ethyl methyl ketone, cyclohexanone, diethylformamide, chloroform, 1,1,2,2-tetrachloroethane, diethylacetamide, dimethylformamide, dimethylacetamide, 1,1,1 trichloroethane, and N-methylpyrrolidone. Mixtures of such diluents can also be employed.

Suitable carrier materials are those materials customarily used for electrodes, preferably metals such as aluminum and copper. It is also possible to use temporary supports, such as films, especially polyester films such as polyethylene terephthalate films. Such films may advantageously be provided with a release layer, preferably comprising polysiloxanes.

In some embodiments, the diisocyanate used in the preparation of the composition describe above comprises: 4,4'-methylenebis-(phenyl isocyanate); hexamethylene diisocyanate; 3,3'-dimethylbiphenyl-4,4'-diisocyanate; m-xylylene diisocyanate; phenylene-1,4-diisocyanate; naphthalene-1,5 -diisocyanate; diphenylmethane-3,3'-dimethoxy-4,4'-diisocyanate; toluene diisocyanate; isophorone diisocyanate; 1,4-cyclohexyl diisocyanate; decane-1,10-diisocyanate; dicyclohexylmethane-4,4'-diisocyanate; or combinations thereof; and the chain extender used in the preparation of the composition describe above comprises: hydroquinone bis (beta-hydroxyethyl) ether; ethylene glycol; diethylene glycol; propylene glycol; dipropylene glycol; 1,4-butanediol; 1,6-hexanediol; 1,3-butanediol; 1,5-pentanediol; neopentylglycol; or combinations thereof.

In some embodiments, the poly(dialkylene ester) polyol intermediate used in the preparation of the compositions describe above comprises poly(diethylene glycol adipate), and the diisocyanate comprises 4,4'-methylenebis-(phenyl isocyanate); and the chain extender comprises butanediol, benzene glycol, or combinations thereof.

In any of the above described embodiments, the thermoplastic polyurethane compositions may be made from a polyester polyol component substantially free of polyether polyols. In still other embodiments, the thermoplastic polyurethane compositions may further comprise at least one base polymer. Suitable base polymers include: a polyolefin; a styrenic resin; a thermoplastic polyurethane, a polyamide; an acrylic polymer; a polyvinylchloride; a polyvinylidene fluoride; a polyethylene oxide; an ethylene oxide-propylene oxide copolymer; a polyacrylonitrile; a polyoxymethylene; a polyester; a polycarbonate; a polyphenylene oxide; polyphenylene sulfide; or combinations thereof.

In some embodiments, fillers may be used in the thermoplastic polyurethane compositions of the invention. Suitable fillers include nanofillers and even nanofibers.

### The Electrochemical Cell

The present invention relates to an electrochemical cell which comprises the electrolyte system defined above. Furthermore, it relates to the use of the electrolyte system as defined herein in electrochemical cells such as a lithium battery. Electrochemical cells include batteries, such as the lithium ion batteries noted herein, and also include capacitors and similar devices, such as electric double-layer capacitors also referred to as super capacitors or ultra-capacitors.

Operatively, disposed between the positive and negative electrodes is an electrolyte system. In the present invention, the electrolyte system may include any of the electrolyte systems described above. The electrolyte system includes a polyurethane adapted to engage, as, for example, by absorption, an electrochemically active species or material. The electrochemically active material may be a liquid electrolyte, such as a metal salt that is dissolved in an organic solvent and which is adapted to promote ion transport between said positive and negative electrodes.

As outlined above, the present invention provides an electrolyte system to be suitably used in electrochemical cells which has the following desired characteristics: (a) the lithium ion-transfer through the system according to the invention is considerably good; (b) the system according to the invention is heat-stable; (c) the system may be bended at 180° without causing any damages to said system, which is particularly important for prismatic cells, i.e., those of the rectangular type, in which these system may be particularly suitably used as electrolyte systems; (d) the system as provided has also elastic properties and thus is able to keep good contact with anode and/or cathode; (e) the system may be heat laminated on a cathode or anode surface, which ensures the desired strong bonding between these surfaces and the system according to the invention, thus allowing for the elimination of rigid metallic casings required by alternative technologies; (f) even after electrolyte immersion, the mechanical strength of the system according to the invention is very good; (g) the production of said system is to be regarded as very economical; (h) the system according to the invention has a good wettability and quick absorption for electrolyte solutions and has reduced risk of leakage compared to liquid electrolyte systems.

The electrochemical cells of the invention generally include a positive electrode and a negative electrode. The positive electrode may be fabricated of any of a number of chemical systems known to those of ordinary skill in the art. Examples of such systems include, but are not limited to, manganese oxide, nickel oxide, cobalt oxide, vanadium oxide, and combinations thereof. The negative electrode may likewise be fabricated from any of a number of electrode materials known to those of ordinary skill in the art. Selection of the negative electrode material is dependent on the selection of the positive electrode so as to assure an electrochemical cell which will function properly for a given application. Accordingly, the negative electrode may be fabricated from, for example, alkali metals, alkali metal alloys, carbon, graphite, petroleum coke, and combinations thereof.

The invention provides for an electrochemical cell comprising a positive electrode, a negative electrode, and the polymer electrolyte described above disposed between said positive and negative electrodes. In some embodiments, the electrochemical cell also includes: (I) electrodes comprising a poly(dialkylene ester) thermoplastic polyurethane composition; (II) a separator membrane disposed between said positive and negative electrodes, wherein the said membrane comprises a poly(dialkylene ester) thermoplastic polyurethane composition; or (III), both (I) and (II). Each of the poly(dialkylene ester) thermoplastic polyurethane compositions may be any of the materials described above and in some embodiments is made by reacting (i) at least one poly(dialkylene ester) polyol intermediate with (ii) at least one diisocyanate and (iii) at least one chain extender, wherein (i), the polyester polyol intermediate, comprises an intermediate derived from at least one dialkylene glycol and at least one di-carboxylic acid, or an ester or anhydride thereof. In some embodiments, the chain extender comprises hydroquinone bis (beta-hydroxyethyl) ether.

The electrochemical cells of the invention may have a charge/discharge cycle life of >500, >750 or even >1000 cycles. The electrochemical cells of the invention may have a charge/discharge efficiency of >90% or even >95% after 500 cycles. The electrochemical cells of the invention may have an operation window of -30 to 100 or -10 to 70°C, where any one or combination of these performance characteristics is or are met over the defined operation window. The electrochemical cells of the invention may be essentially free of any rigid metallic casing and may even be completely free of any rigid metallic casing. The electrochemical cells of the invention may be a pouch type battery.

In still further embodiments, the electrochemical cells of the invention meet at least one of, or any combination of, the following characteristics: (i) a charge/discharge cycle life of >500, >750 or even >1000 cycles; (ii) a charge/discharge efficiency of >90% or even >95% after 500 cycles; (iii) an operation window of -30 to 100°C; (iv) being essentially free of any rigid metallic casing; (v) being a pouch type battery.

In still other embodiments, the poly(dialkylene ester) thermoplastic polyurethane compositions of the present invention, as well as the membranes, electrolyte systems, and/or electrochemical cells made using such polyurethane compositions, are substantially free of inorganic solids. By substantially free, it is meant that the composition contains <10% by weight inorganic solids, or even <5% by weight or <1% by weight inorganic solids. In still other embodiments, the compositions are essentially free of, or even completely free of inorganic solids.

As noted above, any electrodes commonly used in electrochemical cells may be used in the electrochemical cells of the present invention.

In some embodiments, the electrodes used in the electrochemical cells of the present invention comprise: a composition of (A) the poly(dialkylene ester) thermoplastic polyurethane composition described above and (B) an electrode active material.

The electrode may be for a lithium battery where the electrode contains a poly(dialkylene ester) thermoplastic polyurethane composition and a cathode active material or an anode active material, both of which may be referred to as an electrode active material. The electrode may further include a conducting agent, an organic solvent, or both.

Any conventional organic solvent that is used in common batteries can be used in the present invention without particular limitation. However, the organic solvent may be a compound having relatively strong dipole moments. Examples of the compound include dimethylformamide (DMF), dimethylsulfoxide (DMSO), dimethyl acetamide (DMA), acetone, and N-methyl-2-pyrrolidone (hereinafter referred as NMP). In some embodiments, the solvent is NMP. The ratio of thermoplastic polyurethane compositions to the organic solvent may be 1:0.1 through 100 (by weight). If the ratio of the organic solvent is less than 0.1, the thermoplastic polyurethane compositions may not fully dissolve and cannot act as a binder. If the ratio of the organic solvent exceeds 100, the thermoplastic polyurethane compositions dissolves well, but a concentration of the active material solution may be too low, which may causing problems in the coating process.

Any conducting agent that is commonly used in the art can be used in the present invention without particular limitation. Examples of the conducting agent include carbon black and nickel powder. The amount of the conducting agent may be in the range of 0-10% by weight, preferably 1-8% by weight, based on the electrode composition. These conducting agents may be referred to as cathode and/or anode powders.

The electrode of the invention may be sheet-type electrodes or may be a coating on metallic foils. In some embodiments, the thermoplastic polyurethane compositions of the invention are used as a top coating layer of the electrode. The cathodes and anodes described herein, which contain the thermoplastic polyurethane compositions according to the present invention, can be used to manufacture an electrochemical cell such as a lithium battery.

Any separator that is commonly used in lithium batteries can be used in the present invention without limitation. The separator may have high water binding capacity and is less resistant to the migration of ions in the electrolyte. Examples of the separator include a glass fiber, polyester, TEFLON, polyethylene, polypropylene, polytetrafluoroethylene (PTFE) and combinations of these materials, which may be in non-woven or woven fabric form. In particular, the separator may be a polyethylene and/or polypropylene multi-porous membrane, which is less reactive to an organic solvent and guarantees safety.

In some embodiments, the invention further provides for a membrane or separator made from any of the poly(dialkylene ester) thermoplastic polyurethane compositions described above.

In some embodiments, the membrane of the present invention has a Li+ conductivity of >1.0E-5 S/cm (>1.0x10⁻⁵ S/cm), or > 1E-4 S/cm, or >1E-3 S/cm, as measured with a Solartron analytical system at room temperature, typically 20 to 30°C (1470 & 1400). In some embodiments, the membrane has at least one of the following characteristics: (i) a weight average molecular weight of at least 60,000; (ii) a melting point of >120°C, >140°C, or even >160°C; and (iii) a glass transition temperature of <-10°C, or < -20°C, or even <-30°C.

In still further embodiments, the electrochemical cell may be what is referred to as a "solid state battery" where the cell contains solid electrodes and a solid electrolyte/separator system. Sometimes this solid electrolyte/separator system is referred to as a solid electrolyte that negates the need for a separator and/or membrane, but that is only because the solid electrolyte effectively acts as the separator and/or membrane. In such embodiments, the solid electrodes of the cell may be the thermoplastic polyurethane-based electrode described above, and the solid electrolyte/separator system can be the thermoplastic polyurethane-based electrolyte compositions described above.

It is known that some of the materials described above may interact in the final formulation, so that the components of the final formulation may be different from those initially added. For instance, metal ions (of, e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the invention; the invention encompasses the composition prepared by admixing the components described above.

### EXAMPLES

The invention will be further illustrated by the following examples, which sets forth particularly advantageous embodiments. While the examples are provided to illustrate the present invention, they are not intended to limit it.

### Example 1

The table below illustrates various TPU formulations including those prior art samples for comparison purpose. All samples are made with 4,4'-methylenebis-(phenyl isocyanate) (MDI) and are prepared using conventional TPU melt polymerization processing method. In this method, polyols, chain extenders (BDO or HQEE) and catalyst, if needed, are firstly blended and preheated at 120°C. MDI is melted and then mixed with the polyol blend under vigorous stirring for several minutes to polymerize the mixture. The resultant polymers are compression molded to thin membranes at temperatures above the melt points of TPUs for further testing.

**Table 1 - Chemical Compositions for Example 1**

| Sample No | Polyol | Chain Extender |
|---|---|---|
| Comparative 1 | 3000 MW poly(tetramethylene glycol adipate) | HQEE |
| Comparative 2 | 2000 MW ethylene oxide/propylene oxide polyol | HQEE |
| Comparative 3 | 1000 MW polyethylene glycol | BDO |
| Comparative 4 | 1000 MW polytetramethylene ether glycol | BDO |
| Comparative 5 | 1000 MW polytetramethylene ether glycol | HQEE |
| 1 | 3000 MW poly(diethylene glycol adipate) | HQEE |
| 2 | Mixture of 3000 MW poly(tetramethylene glycol adipate) and 3000 MW poly(diethylene glycol adipate) (50/50) | HQEE |

### Example 2

Table 2 below summarizes the results for the TPU samples in Example 1. Shore A hardness at 5 sec is tested in accordance with ASTM D-2240, and a higher number indicates a harder material. TPU membranes are dried in the vacuum oven at 80°C for 24 hr. and then immersed into liquid electrolyte for 12 hr. before being assembled between cathode and anode for conductivity test. Circular membrane samples swelled in both dimensions when soaked in electrolyte, and the dimensional changes as well as weight change are measured.

**Table 2 - Test Results of Samples in Example 1**

| Sample No | Hardness¹ | Li Ion Conductivity ² (mS/cm) | Swelling³ | |
|---|---|---|---|---|
| | | | Radial (%) | Axial (%) |
| Comparative 1 | 87A | 0.05 | 22 | 19 |
| Comparative 2 | 88A | 0.86 | 59 | 2 |
| Comparative 3 | 90A | 0.38 | 41 | 0 |
| Comparative 4 | 82A | 0.30 | 1 | 5 |
| Comparative 5 | 80A | 0.11 | 0 | 6 |
| 1 | 89A | 1.24 | 29 | 7 |
| 2 | 89A | 1.18 | 29 | 20 |

| | | | | |
|---|---|---|---|---|
| 1 - Hardness is presented in a Shore A units, as measured by ASTM D-2240. 2 - Li ion conductivity is present in mS/cm. The values in the table above are averages of three separate test results. Results were obtained by dipping the membrane to be tested into a liquid electrolyte (1.2 M LiPF₆ in a 30:70 blend of ethylene carbonate: ethyl methyl carbonate) for 12 hours, then removing the membrane, wiping the surface with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. 3 - Swelling is evaluated using a liquid electrolyte (1.2 M LiPF₆ in a 30:70 blend of ethylene carbonate:ethylmethyl carbonate). The dimension of film samples was measured before and after soaking in the liquid electrolyte for 12 hour. The axial swell = (thickness after soaking-thickness before soaking)/thickness before soaking×100%. The radial swell = (diameter after soaking-diameter before soaking)/diameter before soaking×100%. | | | | |

Conductivity higher than 10⁻³ S/cm is highly desired for Li-ion battery polymer electrolytes to ensure low capacity loss during charge and discharge cycles. The results show that the compositions (Sample 1 and 2) of the present invention provide significantly higher conductivity compared to the comparative compositions. The conductivity of Samples 1 and 2 is 1.24 E-03 S/cm and 1.18 E-03 S/cm, respectively. Comparative Examples 4 and 5 have the lowest swellings comparing to others, but it has significantly lower conductivity than Samples 1 and 2. These inventive examples have a good overall balance of properties: (i) an average lithium ion conductivity of at least 1.00E-03 S/cm; (ii) a radial swell result of no more than ∼40%; and (iii) an axial swell result of no more than ∼20%.

### Example 3

Following the Example 1 and 2 study, a second TPU example set is prepared by continuous reactive extrusion. Table 3 illustrates the formulations of the TPU compositions tested. All examples are made with MDI.

**Table 3 - Chemical Compositions for Example 3**

| Sample No | Polyol | Chain Extender |
|---|---|---|
| 3 | 2000 MW poly(diethylene glycol adipate) | HQEE |
| 4 | 3000 MW poly(diethylene glycol adipate) | HQEE |
| 5 | Mixture of 3000 MW poly(tetramethylene glycol adipate) and 3000 MW poly(diethylene glycol adipate) (50/50) | HQEE |

### Example 4

Samples are extruded into thin films with thickness of 1.0 mil or less by melt cast process for evaluation, including thermal property, mechanical property, Li ion conductivity, thermal shrinkage, and swelling when exposed to common electrolyte systems. Table 4 - 6 below summarize the test results.

**Table 4 - Test Results of Dry Films of Example 3**

| Sample No | Hardness¹ | Thermal Properties² | | Puncture strength³ (lbf) | Tensile Properties⁴ | | Thermal Shrinkage⁵ | |
|---|---|---|---|---|---|---|---|---|
| | | T_{g} (°C) | Tₘ (°C) | | Stress @ Break (psi) | Strain @ Break (%) | Machine Direction (%) | Transverse Direction (%) |
| 3 | 85A | -23 | 177 | - | 6225 | 607 | 1.7 | 0.4 |
| 4 | 87A | -26 | 179 | - | 7310 | 583 | 1.1 | 0 |
| 5 | 84A | -30 | 168 | 4.8 (0.8 mil) | 8085 | 458 | 1.5 | 0 |

| | | | | | | | | |
|---|---|---|---|---|---|---|---|---|
| 1 - Hardness is presented in a Shore A units, as measured by ASTM D-2240. 2 - Tg and Tm were determined from differential scanning calorimetry curve. 3 - Puncture strength was tested in accordance with FTMS 101C-Method 2065. 4 - Mechanical properties were tested in accordance with ASTM D882. 5 - Thermal shrinkage was determined by measuring the TPU films' initial dimensions and then placing the samples in vacuum drying oven at 90°C for 1 hour. The final dimensions are then measured and shrinkage is calculated from the change in dimensions: Shrinkage (%) = (final dimension- initial dimension)/initial dimension×100%. Both machine direction and transverse direction were measured. | | | | | | | | |

**Table 5 - Test Results of Swollen Films with Electrolyte in Example 3.**

| Example No | Electrolyte Absorption¹ (%) | Swelling² | | Tensile Properties³ | |
|---|---|---|---|---|---|
| | | Radial (%) | Axial (%) | Stress @ Break (psi) | Strain @ Break (%) |
| 3 | 226 | 38 | 17 | - | - |
| 4 | 203 | 40 | 7 | - | - |
| 5 | 206 | 44 | 15 | 1700 | 315 |

| | | | | | |
|---|---|---|---|---|---|
| 1 - Electrolyte takeup is measured by weighing the sample before and after soaking in electrolyte (1.2 M LiPF₆ in a 30:70 blend of ethylene carbonate:ethylmethyl carbonate) for 12h and calculating by equation: Electrolyte takeup (%) = (sample weight after soaking - sample weight before soaking)/sample weight before soaking×100%. 2 - Swelling is evaluated using a liquid electrolyte (1.2 M LiPF₆ in a 30:70 blend of ethylene carbonate:ethylmethyl carbonate). The dimension of film samples was measured before and after soaking in the liquid electrolyte for 12 hour. The axial swell (%) = (thickness after soaking-thickness before soaking)/thickness before soaking×100%. The radial swell (%) = (radius after soaking-radius before soaking)/radius before soaking×100%. 3 - Mechanical properties were tested on swollen film samples after 12 hours' soaking in electrolyte (1.2 M LiPF₆ in a 30:70 blend of ethylene carbonate:ethylmethyl carbonate) in accordance with ASTM D882. | | | | | |

**Table 6 - Conductivity Test Results of Example 3.**

| Example No | Li Ion Conductivity¹ (mS/cm) |
|---|---|
| 3 | 1.15 |
| 4 | 1.22 |
| 5 | 1.09 |

| | |
|---|---|
| 1 - Li ion conductivity is present in mS/cm. The values in the table above are averages of three separate test results. Results were obtained by dipping the membrane to be tested into a liquid electrolyte (1.2 M LiPF₆ in a 30:70 blend of ethylene carbonate: ethyl methyl carbonate) for 12 hours, then removing the membrane, wiping the surface with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. | |

### Example 5

Coin cells (CR2016) are made of two circular electrode discs, LiFePO₄ cathode and an MCMB anode, and a polymer electrolyte. For comparison purpose, a benchmark cell is constructed with LiFePO₄ cathode and an MCMB anode, and Celgard^{®} 3501 separator in between. In the case of Celgard^{®} 3501, the porous film is used directly and for TPU polymer electrolyte, the films are immersed in liquid electrolyte for 12 hours before assembly. All coin cells are assembled in an argon-filled glove box at oxygen level below 0.1 pm and humidity level below 0.1 ppm. Electrode discs are punched out from the anode and cathode laminates. The cathode disc (1.4 mm) is placed in the center of the coin cell outer shell. A separator or TPU polymer electrolyte film (1.6 mm for Celgard^{®} 3501 and 1.4mm for TPUs) is placed concentric on top of the cathode. 6 drops of electrolyte are loaded on the surface of the Celgard^{®} 3501. The anode disc is placed on the top of separator or polymer electrolyte film. A stainless steel spacer is put on the top of anode and followed by a disk spring. The stack is then covered by a lid and cramped closed with a hydraulic press at 10 MPa. Electrolyte is prepared using 1.2 M LiTFSI in EC/EMC (30/70) blend.

### Example 6

As listed in Table 7, blends of polypropylene (PP) and Sample 4, along with compatibilizers are compounded in a twin-screw extruder.

**Table 7 - Formulations for Example 6**

| Sample No | Sample 4 (%) | PP(%) | Compatibilizer (%) |
|---|---|---|---|
| 6 | 45.0 | 50.0 | 5.0 |
| 7 | 67.5 | 25.0 | 7.5 |

### Example 7

Samples are extruded into thin film with thickness of 1-2 mil by melt cast process for Li-ion conductivity, mechanical strength and thermal shrinkage tests.

**Table 8 - Test Results for Example 6**

| Sample No | Tensile properties on dry film¹ | | Thermal shrinkage on dry film² | |
|---|---|---|---|---|
| | Stress @ break (psi) | Strain @ break (%) | Machine Direction (%) | Transverse Direction (%) |
| 6 | 6290 | 696 | 0.7 | 0 |
| 7 | 5120 | 659 | 0.7 | 0 |

| | | | | |
|---|---|---|---|---|
| 1 - Mechanical properties were tested in accordance with ASTM D882. 2 - Thermal shrinkage was determined by measuring the TPU films' initial dimensions and then placing the samples in vacuum drying oven at 90°C for 1 hour. The final dimensions are then measured and shrinkage is calculated from the change in dimensions: Shrinkage (%) = (final dimension- initial dimension)/initial dimension×100%. Both machine direction and transverse direction were measured. | | | | |

**Table 9 - Test Results for Example 6**

| Sample No | Li Ion Conductivity¹ (mS/cm) |
|---|---|
| 6 | 0.40 |
| 7 | 0.92 |

| | |
|---|---|
| 1 - Li ion conductivity is present in mS/cm. The values in the table above are averages of three separate test results. Results were obtained by dipping the membrane to be tested into a liquid electrolyte (1.2 M LiPF₆ in a 30:70 blend of ethylene carbonate: ethyl methyl carbonate) for 12 hours, then removing the membrane, wiping the surface with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. | |

### Example 8

As listed in Table 10, alloys of Sample 4 and nanofillers are compounded by a twin-screw extruder.

**Table 10 - Formulations of Example 8**

| Sample No | Sample 4 (%) | Nano Filler (%) | |
|---|---|---|---|
| | | Nano Silica | Nano Alumina |
| 8 | 99 | 1 | |
| 9 | 95 | 5 | |
| 10 | 90 | 10 | |
| 11 | 99 | | 1 |
| 12 | 95 | | 5 |
| 13 | 90 | | 10 |
| 14 | 85 | | 15 |

### Example 9

Li-ion conductivity of Example 8 is tested and listed in Table 11. With the increase of nano-filler content, the Li-ion conductivity of alloys increased significantly.

**Table 11 - Test Results of Example 8**

| Sample No | Li Ion Conductivity¹ (mS/cm) |
|---|---|
| 8 | 1.90 |
| 9 | 1.92 |
| 10 | 6.33 |
| 11 | 2.14 |
| 12 | 3.04 |
| 13 | 3.59 |
| 14 | 4.85 |

| | |
|---|---|
| 1 - Li ion conductivity is present in mS/cm. The values in the table above are averages of three separate test results. Results were obtained by dipping the membrane to be tested into a liquid electrolyte (1.2 M LiPF₆ in a 30:70 blend of ethylene carbonate: ethyl methyl carbonate) for 12 hours, then removing the membrane, wiping the surface with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. | |

### Example 10

Still further examples are prepared to demonstrate the suitability of the TPU compositions of the invention for electrochemical cell applications, including Li-ion batteries. The following TPU compositions are prepared and tested to measure their hardness, their Li-ion conductivity, and their swelling properties. The formulations and results of these additional samples are summarized in the table below.

**Table 12 - Chemical Compositions for Example 10**

| Sample No | Polyol | Chain Extender |
|---|---|---|
| 15 | 3000 MW poly(diethylene glycol adipate) | BDO |
| 16 | 3000 MW poly(diethylene glycol adipate) | CHDM |
| 17 | 2000 MW polyneopentyl adipate | BDO |
| 18 | 2000 MW poly(ethylene glycol adipate) | BDO |
| 19 | 1000 MW poly(ethylene glycol/diethylene glycol adipate) | BDO |
| 20 | 1000 MW poly(ethylene glycol/diethylene glycol adipate) | CHDM |

Samples are extruded into thin films with thickness of 1.0 mil or less by melt cast process for evaluation, including mechanical properties, Li ion conductivity, and swelling when exposed to common electrolyte systems. Samples 16 and 20 are not according to the invention.

**Table 13 - Results for Example 10**

| Sample No | Hardness¹ | Li Ion Conductivity² (mS/cm) | Swelling³ | |
|---|---|---|---|---|
| | | | Radial (%) | Radial (%) |
| 15 | 87A | 1.24 | 19 | 9 |
| 16 | 84A | Dissolved⁴ | - | - |
| 17 | 87A | 0.78 | 34 | 18 |
| 18 | 88A | 1.06 | 48 | 23 |
| 19 | 91A | 1.39 | 54 | 25 |
| 20 | 84A | Dissolved⁴ | - | - |

| | | | | |
|---|---|---|---|---|
| 1 - Hardness is presented in a Shore A units, as measured by ASTM D-2240. 2 - Li ion conductivity is present in mS/cm. The values in the table above are averages of three separate test results. Results were obtained by dipping the dried membrane (stored at 80 °C in the vacuum oven for 24 hr) to be tested into a liquid electrolyte (1.2 M LiPF₆ in a 30:70 blend of ethylene carbonate: ethyl methyl carbonate) for 12 hours, then removing the membrane, wiping the both surfaces with filter paper to remove excess liquid electrolyte, placing the membrane sandwiched between two stainless steel electrodes, and then measuring by electrochemical impedance spectroscopy using Solartron 1470E Multistat (London Scientific, Canada). The frequency was set from 0.1 MHz to 10 Hz with 10 mV amplitude. 3 - Swelling is evaluated using a liquid electrolyte (1.2 M LiPF₆ in a 30:70 blend of ethylene carbonate:ethylmethyl carbonate). The dimension of film samples was measured by caliper before and after soaking in the liquid electrolyte for 12 hour. The axial swell (%) = (thickness after soaking-thickness before soaking)/thickness before soaking×100%. The radial swell (%) = (radius after soaking-radius before soaking)/radius before soaking×100%. 4 - Samples 18 and 22 dissolved in the electrolyte system and so no swelling measurements could be completed. | | | | |

The results show that the TPU compositions of the invention, specifically samples 15, 17, 18, and 19, are well suited for use in electrochemical cell applications, including Li-ion batteries, and sample 15 is very well suited, having a very good combination of physical properties, electrolyte compatibility, and conductivity compared to other TPU compositions.

Except in the Examples, or where otherwise explicitly indicated, all numerical quantities in this description specifying amounts of materials, reaction conditions, molecular weights, number of carbon atoms, and the like, are to be understood as modified by the word "about." Unless otherwise indicated, all percent values, ppm values and parts values are on a weight basis. Unless otherwise indicated, each chemical or composition referred to herein should be interpreted as being a commercial grade material which may contain the isomers, by-products, derivatives, and other such materials which are normally understood to be present in the commercial grade. However, the amount of each chemical component is presented exclusive of any solvent or diluent oil, which may be customarily present in the commercial material, unless otherwise indicated. It is to be understood that the upper and lower amount, range, and ratio limits set forth herein may be independently combined. Similarly, the ranges and amounts for each element of the invention can be used together with ranges or amounts for any of the other elements. As used herein, the expression "consisting essentially of" permits the inclusion of substances that do not materially affect the basic and novel characteristics of the composition under consideration while the expression "essentially free of" permits the exclusion of substances at least to a level that does not materially affect the basic and novel characteristics of the composition under consideration.

## Claims

1. A polymer gel electrolyte system for use in an electrochemical cell having positive and negative electrodes, said electrolyte system comprising:
(A) a poly(dialkylene ester) thermoplastic polyurethane composition,
(B) an alkali metal salt; and
(C) an aprotic organic solvent,
**characterized in that** the poly(dialkylene ester) thermoplastic polyurethane composition is made by reacting (i) at least one poly(dialkylene ester) polyol intermediate with (ii) at least one diisocyanate and (iii) at least one chain extender, wherein (i), the polyester (dialkylene ester) polyol intermediate, comprises an intermediate derived from diethylene glycol and adipic acid and having a number average molecular weight of from 1,000 to 4,000 and wherein (iii), the chain extender, is hydroquinone bis (beta-hydroxyethyl) ether and/or 1,4-butanediol.

2. The electrolyte system of claim 1, wherein (ii), the diisocyanate, comprises: 4,4'-methylenebis-(phenyl isocyanate); hexamethylene diisocyanate; 3,3'-dimethylbiphenyl-4,4'-diisocyanate; m-xylylene diisocyanate; phenylene-1,4-diisocyanate; naphthalene-1,5-diisocyanate; diphenylmethane-3,3'-dimethoxy-4,4'-diisocyanate; toluene diisocyanate; isophorone diisocyanate; 1,4-cyclohexyl diisocyanate; decane-1,10-diisocyanate; dicyclohexylmethane-4,4'-diisocyanate; or combinations thereof.

3. The electrolyte system of any of the claim 1 or 2, wherein said thermoplastic polyurethane composition has at least one of the following characteristics:
(i) a weight average molecular weight of at least 60,000;
(ii) a melting point of >120 °C; and
(iii) a glass transition temperature of <-10 °C.

4. The electrolyte system of any of the claims 1 to 3 wherein said alkali metal salt is selected from the group consisting of materials having the formula M⁺ X-;
wherein M⁺ is an alkali metal cation such as Li⁺, Na⁺, K⁺ or combinations thereof; and
wherein X⁻ is an ion such as Cl⁻, Br⁻, I⁻, ClO₄⁻, BF₄⁻, PF₆⁻, AsF₆⁻, SbF₆⁻, CH₃CO₂⁻, CF₃SO₃⁻, (CH₃SO₂)₂N⁻, (CF₃SO₂)₃C⁻, B(C₂O₄)⁻, or combinations thereof; and
wherein said aprotic organic solvent is selected from the group consisting of propylene carbonate, ethylene carbonate, diethyl carbonate, ethyl methyl carbonate, dimethyl carbonate, dipropyl carbonate, dimethyl sulfoxide, acetonitrile, dimethyloxyethane, diethoxyethane, tetrahydrofuran and combinations thereof.

5. The electrolyte system of any of the claims 1 to 4 further comprising at least one base polymer, or further comprising at least one base polymer, wherein the base polymer comprises: a polyolefin; a styrenic resin; a thermoplastic polyurethane, a polyamide; an acrylic polymer; a polyvinylchloride; a polyvinylidene fluoride; a polyethylene oxide; an ethylene oxide-propylene oxide copolymer; a polyacrylonitrile; a polyoxymethylene; a polyester; a polycarbonate; a polyphenylene oxide; polyphenylene sulfide; or combinations thereof.

6. The electrolyte system of any of the claims 1 to 5 further comprising at least one additional additive, comprising a plasticizer, a lubricant, an antioxidant, a heat stabilizer, hydrolytic stabilizer, an acid scavenger, mineral and/or inert filler, a nano filler, or any combination thereof.

7. An electrochemical cell comprising a positive electrode, a negative electrode, and the polymer gel electrolyte system as defined in any of claims 1 to 6 disposed between said positive and negative electrodes.

8. The electrochemical cell of claim 7 having at least one of the following characteristics:
(i) a charge/discharge cycle life of >500 cycles;
(ii) a charge/discharge efficiency of >90% after 500 cycles;
(iii) an operation window of -10 °C to 70 °C;
(iv) is essentially free of any rigid metallic casing;
(v) is a pouch type battery.

9. The electrochemical cell of claim 7 or 8, wherein the electrochemical cell further comprises:
(II) a separator membrane disposed between said positive and negative electrodes, wherein the said membrane comprises (A) the poly(dialkylene ester) thermoplastic polyurethane composition as defined in any of claims 1 to 3.

10. The electrochemical cell of any of the claims 7 to 9, wherein the positive and negative electrodes comprise a composition of (a) the poly(dialkylene ester) thermoplastic polyurethane composition as defined in any of claims 1 to 3 and (b) a cathode or anode powder.

## Patentansprüche

1. Polymergel-Elektrolytsystem zur Verwendung in einer elektrochemischen Zelle mit einer positiven und einer negativen Elektrode, wobei das Elektrolytsystem umfasst:
(A) eine thermoplastische Polydialkylenester-Polyurethan-Zusammensetzung;
(B) ein Alkalimetallsalz; und
(C) ein aprotisches organisches Lösungsmittel;
**dadurch gekennzeichnet, dass** die thermoplastische Polydialkylenester-Polyurethan-Zusammensetzung dadurch hergestellt wird, dass man (i) wenigstens ein Polydialkylenester-Polyol-Zwischenprodukt mit (ii) wenigstens einem Diisocyanat und (iii) wenigstens einem Kettenverlängerer umsetzt, wobei (i) das Polydialkylenester-Polyol-Zwischenprodukt ein Zwischenprodukt umfasst, das von Diethylenglycol und Adipinsäure abgeleitet ist und ein Zahlenmittel des Molekulargewichts von 1000 bis 4000 aufweist, und wobei es sich bei (iii) dem Kettenverlängerer um Hydrochinon-bis(beta-hydroxyethyl)ether und/oder 1,4-Butandiol handelt.

2. Elektrolytsystem gemäß Anspruch 1, wobei (ii) das Diisocyanat 4,4'-Methylenbis(phenylisocyanat), Hexamethylendiisocyanat, 3,3'-Dimethyl-biphenyl-4,4'-diisocyanat, m-Xylylendiisocyanat, Phenylen-1,4-diisocyanat, Naphthalin-1,5-diisocyanat, Diphenylmethan-3,3'-dimethoxy-4,4'-diisocyanat, Toluoldiisocyanat, Isophorondiisocyanat, 1,4-Cyclohexyldiisocyanat, Decan-1,10-diisocyanat, Dicyclohexylmethan-4,4'-diisocyanat oder Kombinationen davon umfasst.

3. Elektrolytsystem gemäß einem der Ansprüche 1 oder 2, wobei die thermoplastische Polyurethanzusammensetzung wenigstens eines der folgenden Merkmale aufweist:
(i) ein Gewichtsmittel des Molekulargewichts von wenigstens 60 000;
(ii) einen Schmelzpunkt von > 120 °C; und
(iii) eine Glasübergangstemperatur von < -10 °C.

4. Elektrolytsystem gemäß einem der Ansprüche 1 bis 3, wobei das Alkalimetallsalz aus der Gruppe ausgewählt ist, die aus Stoffen mit der Formel M⁺X⁻ besteht;
wobei M⁺ ein Alkalimetallkation ist, wie Li⁺, Na⁺, K⁺ oder Kombinationen davon; und
wobei X⁻ ein Ion ist wie Cl⁻, Br⁻, I⁻, ClO₄⁻, BF4 , PF₆⁻, AsF₆⁻, SbF₆⁻, CH₃CO₂⁻, CF₃SO₃⁻, (CH₃SO₂)₂N⁻, (CF₃SO₂)₃C⁻, B(C₂O₄)⁻ oder Kombinationen davon; und
wobei das aprotische organische Lösungsmittel aus der Gruppe ausgewählt ist, die aus Propylencarbonat, Ethylencarbonat, Diethylcarbonat, Ethylmethylcarbonat, Dimethylcarbonat, Dipropylcarbonat, Dimethylsulfoxid, Acetonitril, Dimethyloxyethan, Diethoxyethan, Tetrahydrofuran und Kombinationen davon besteht.

5. Elektrolytsystem gemäß einem der Ansprüche 1 bis 4, weiterhin umfassend wenigstens ein Grundpolymer oder weiterhin umfassend wenigstens ein Grundpolymer, wobei das Grundpolymer ein Polyolefin, ein styrolisches Harz, ein thermoplastisches Polyurethan, ein Polyamid, ein Acrylpolymer, ein Polyvinylchlorid, ein Polyvinylidenfluorid, ein Polyethylenoxid, ein Ethylenoxid-Propylenoxid-Copolymer, ein Polyacrylnitril, ein Polyoxymethylen, ein Polyester, ein Polycarbonat, ein Polyphenylenoxid, ein Polyphenylensulfid oder Kombinationen davon umfasst.

6. Elektrolytsystem gemäß einem der Ansprüche 1 bis 5, weiterhin umfassend wenigstens ein zusätzliches Additiv, das einen Weichmacher, ein Gleitmittel, ein Antioxidans, einen Wärmestabilisator, einen Hydrolysestabilisator, einen Säurefänger, einen mineralischen und/oder inerten Füllstoff, einen Nanofüllstoff oder eine Kombination davon umfasst.

7. Elektrochemische Zelle, die eine positive Elektrode, eine negative Elektrode und das Polymergel-Elektrolytsystem gemäß einem der Ansprüche 1 bis 6, das sich zwischen der positiven und der negativen Elektrode befindet, umfasst.

8. Elektrochemische Zelle gemäß Anspruch 7, die wenigstens eines der folgenden Merkmale aufweist:
(i) eine Lade-/Entlade-Zyklus-Lebensdauer von > 500 Zyklen;
(ii) eine Lade-/Entlade-Effizienz von > 90% nach 500 Zyklen;
(iii) ein Betriebsfenster von -10 °C bis 70 °C;
(iv) sie ist im Wesentlichen frei von jedem starren Metallgehäuse;
(v) sie ist eine Batterie des Beuteltyps.

9. Elektrochemische Zelle gemäß Anspruch 7 oder 8, wobei die elektrochemische Zelle weiterhin umfasst:
(II) eine Separatormembran, die sich zwischen der positiven und der negativen Elektrode befindet, wobei die Membran (A) die thermoplastische Polydialkylenester-Polyurethan-Zusammensetzung, wie sie in einem der Ansprüche 1 bis 3 definiert ist, umfasst.

10. Elektrochemische Zelle gemäß einem der Ansprüche 7 bis 9, wobei die positive und die negative Elektrode eine Zusammensetzung aus (a) der thermoplastischen Polydialkylenester-Polyurethan-Zusammensetzung, wie sie in einem der Ansprüche 1 bis 3 definiert ist, und (b) ein Kathoden- oder Anodenpulver umfassen.

## Revendications

1. Système électrolytique de type gel polymère pour son utilisation dans une cellule électrochimique ayant des électrodes positive et négative, ledit système électrolytique comprenant :
(A) une composition de polyuréthane thermoplastique à base d'un poly(ester de dialkylène),
(B) un sel de métal alcalin ; et
(C) un solvant organique aprotique,
**caractérisé en ce que** la composition de polyuréthane thermoplastique à base d'un poly(ester de dialkylène) est préparée par la réaction (i) d'au moins un intermédiaire de type poly(ester de dialkylène) polyol avec (ii) au moins un diisocyanate et (iii) au moins un agent d'allongement de chaîne, dans lequel (i), l'intermédiaire de type polyester (ester de dialkylène) polyol, comprend un intermédiaire dérivé du diéthylène glycol et de l'acide adipique et possédant un poids moléculaire moyen en nombre de 1000 à 4000 et dans lequel (iii), l'agent d'allongement de chaîne, est l'hydroquinone bis(bêta-hydroxyéthyl)éther et/ou le 1,4-butanediol.

2. Système électrolytique selon la revendication 1, dans lequel (ii), le diisocyanate, comprend : le 4,4'-méthylènebis-(phénylisocyanate) ; le diisocyanate d'hexaméthylène ; le 3,3'-diméthylbiphényl-4,4'-diisocyanate ; le diisocyanate de m-xylylène ; le phénylène-1,4-diisocyanate ; le naphtalène-1,5-diisocyanate ; le diphénylméthane-3,3'-diméthoxy-4,4'-diisocyanate ; le diisocyanate de toluène ; le diisocyanate d'isophorone ; le 1,4-cyclohexyldüsocyanate ; le décane-1,10-diisocyanate ; le dicyclohexylméthane-4,4'-diisocyanate ; ou leurs combinaisons.

3. Système électrolytique selon l'une quelconque des revendications 1 ou 2, dans lequel ladite composition de polyuréthane thermoplastique présente au moins l'une des caractéristiques suivantes :
(i) un poids moléculaire moyen en poids d'au moins 60 000 ;
(ii) un point de fusion > 120 °C ; et
(iii) une température de transition vitreuse < -10 °C.

4. Système électrolytique selon l'une quelconque des revendications 1 à 3 dans lequel ledit sel de métal alcalin est choisi dans le groupe constitué des substances ayant la formule M⁺ X⁻ ;
dans laquelle M⁺ est un cation de métal alcalin tel que Li⁺, Na⁺, K⁺ ou leurs combinaisons ; et
dans laquelle X⁻ est un ion tel que Cl⁻, Br⁻, I⁻, ClO₄⁻, BF₄⁻, PF₆⁻, AsF₆⁻, SbF₆⁻, CH₃CO₂⁻, CF₃SO₃⁻, (CH₃SO₂)₂N⁻, (CF₃SO₂)₃C⁻, B(C₂O₄)⁻, ou leurs combinaisons ; et dans lequel ledit solvant organique aprotique est choisi dans le groupe constitué du carbonate de propylène, du carbonate d'éthylène, du carbonate de diéthyle, du carbonate d'éthyle et de méthyle, du carbonate de diméthyle, du carbonate de dipropyle, du diméthylsulfoxyde, de l'acétonitrile, du diméthyloxyéthane, du diéthoxyéthane, du tétrahydrofuranne et de leurs combinaisons.

5. Système électrolytique selon l'une quelconque des revendications 1 à 4 comprenant en outre au moins un polymère de base, ou comprenant en outre au moins un polymère de base, dans lequel le polymère de base comprend : une polyoléfine ; une résine styrénique ; un polyuréthane thermoplastique, un polyamide ; un polymère acrylique ; un polychlorure de vinyle ; un polyfluorure de vinylidène ; un polyoxyde d'éthylène ; un copolymère d'oxyde d'éthylène-oxyde de propylène ; un polyacrylonitrile ; un polyoxyméthylène ; un polyester ; un polycarbonate ; un polyoxyde de phénylène ; un polysulfure de phénylène ; ou leurs combinaisons.

6. Système électrolytique selon l'une quelconque des revendications 1 à 5 comprenant en outre au moins un additif supplémentaire, comprenant un plastifiant, un lubrifiant, un antioxydant, un stabilisant thermique, un stabilisant hydrolytique, un désactivateur d'acide, un minéral et/ou une matière inerte de remplissage, une nanomatière de remplissage, ou n'importe quelle combinaison de ceux-ci.

7. Cellule électrochimique comprenant une électrode positive, une électrode négative, et le système électrolytique de type gel polymère tel que défini dans l'une quelconque des revendications 1 à 6 disposé entre lesdites électrodes positive et négative.

8. Cellule électrochimique selon la revendication 7 présentant au moins l'une des caractéristiques suivantes :
(i) un cycle de vie de charge/décharge > 500 cycles ;
(ii) un rendement de charge/décharge > 90 % après 500 cycles ;
(iii) une plage de fonctionnement allant de -10 °C à 70 °C ;
(iv) est essentiellement exempte d'un quelconque boîtier métallique rigide ;
(v) est une batterie de type étui.

9. Cellule électrochimique selon la revendication 7 ou 8, dans laquelle la cellule électrochimique comprend en outre :
(II) une membrane de séparateur disposée entre lesdites électrodes positive et négative, dans laquelle ladite membrane comprend (A) la composition de polyuréthane thermoplastique à base d'un poly(ester de dialkylène) tel que définie dans l'une quelconque des revendications 1 à 3.

10. Cellule électrochimique selon l'une quelconque des revendications 7 à 9, dans laquelle les électrodes positive et négative comprennent une composition (a) de la composition de polyuréthane thermoplastique à base d'un poly(ester de dialkylène) tel que définie dans l'une quelconque des revendications 1 à 3 et (b) une poudre de cathode ou d'anode.
